# EUROPÄISCHE PATENTSCHRIFT

(11) **EP 2 263 093 B1**
(45) Veröffentlichungstag und Bekanntmachung des Hinweises auf die Patenterteilung: **31.07.2013**
(21) Anmeldenummer: 09728656.1
(22) Anmeldetag: 03.04.2009
(51) Int. Cl.: G01P 15/18, G01P 15/125

(54) **MIKROMECHANISCHER BESCHLEUNIGUNGSSENSOR**
MICROMECHANICAL ACCELERATION SENSOR
CAPTEUR D'ACCELERATION MICROMECANIQUE

(30) Priorität: 03.04.2008 DE 102008017156
(43) Veröffentlichungstag der Anmeldung: 22.12.2010
(73) Patentinhaber: Continental Teves AG & Co. oHG, 60488 Frankfurt (DE)
(72) Erfinder: BURGHARDT, Roland, 60439 Frankfurt Am Main (DE); HILSER, Roland, 73230 Kirchheim Teck (DE); SCHMID, Bernhard, 61169 Friedberg (DE); ALBRECHT, Veith, 63150 Heusenstamm (DE); THEOBALD, Dirk, 65760 Eschborn (DE)
(86) Internationale Anmeldenummer: PCT/EP2009/054052
(87) Internationale Veröffentlichungsnummer: WO 2009/121971

(56) Entgegenhaltungen:
- WO-A-03/104823
- DE-A1- 4 224 383
- DE-A1- 19 649 715
- DE-A1- 19 703 832
- DE-A1-102007 012 163
- DE-C1- 19 750 350
- FR-A- 2 739 190
- JP-A- 2002 318 244
- US-A- 4 598 585
- US-A- 6 082 197
- US-A1- 2007 034 007

## Beschreibung

Die Erfindung betrifft einen mikromechanischen Beschleunigungssensor gemäß Oberbegriff von Anspruch 1, ein Verfahren zur Herstellung eines Beschleunigungssensors gemäß Oberbegriff von Anspruch 14 sowie die Verwendung des Beschleunigungssensors in Kraftfahrzeugen.

Drucksdrift US 2007/0034007 A1 offenbart einen mehrachsigen kapazitiven Beschleunigungssensor mit einer seismischen Masse, die in einem Rahmen und über diesen an einem Substrat aufgehängt ist. Durch die groβe Detektorelektrodenfläche kann ein hohes Signal-zu-RauschVerhältnis auch für kleine Beschleunigungen erreicht werden.

Druckschrift WO 03/104823 schlägt einen mikromechanischen, kapazitiven Beschleunigungssensor zur Erfassung von Beschleunigungen in mehreren Raumrichtungen vor, welcher mehrere seismische Massen mit unterschiedlich zueinander ausgerichteten Torsionsaufhängungen umfasst, wobei die seismischen Massen jeweils exzentrisch gegenüber ihrem Schwerpunkt aufgehängt sind. Dieser Beschleunigungssensor ist relativ gut zur Erfassung von betragsmäßig relativ geringen Beschleunigungen geeignet, allerdings weniger gut zur Erfassung betragsmäßig relativ großer Beschleunigungen.

Die Aufgabe der vorliegenden Erfindung besteht darin, einen mikromechanischen Beschleunigungssensor vorzuschlagen, welcher zumindest zwei unterschiedliche Beschleunigungen, die sich zumindest betragsmäßig wesentlich unterscheiden, relativ präzise erfassen kann, und dabei insbesondere relativ kostengünstig ist.

Die Aufgabe wird erfindungsgemäß gelöst durch den Beschleunigungssensor gemäß Anspruch 1 und das Verfahren zur Herstellung eines Beschleunigungssensors gemäß Anspruch 14.

Der Erfindung liegt insbesondere der Gedanke zu Grunde, wenigstens zwei unterschiedliche Teil-Beschleunigungssensorelemente in einem mikromechanischen Sensor zu integrieren, indem diese über mindestens einen Rahmen zumindest teilweise entkoppelt sind, welcher zweckmäßigerweise selbst Teil zumindest eines der Teil-Beschleunigungssensorelemente ist.

Der Beschleunigungssensor ist zweckmäßigerweise so ausgelegt, dass durch die Auslenkung des ersten Rahmens relativ zum Substrat Beschleunigungen relativ präzise erfasst werden können, welche betragsmäßig größer als 25g sind und dabei durch die Auslenkung zumindest der ersten seismischen Masse relativ zu dem Rahmen, an welchem diese aufgehängt ist, relativ präzise Beschleunigungen erfasst werden können, welche weniger als 10g betragen. Insbesondere wird durch den ersten Rahmen sowie indirekt durch die an diesem befestigten bzw. aufgehängten Bauelemente ein Airbagsensorteilelement, als ein erstes Teil-Beschleunigungssensorelement, verwirklicht und durch die erste seismische Masse ein zweites Teilbeschleunigungssensorelement für ein elektronisches Stabilitäts-Programm (ESP).

Der erfindungsgemäße Beschleunigungssensor hat zusätzlich den Vorteil, dass mittels des wenigstens einen Rahmens zusätzlich eine im Wesentlichen entkoppelte Erfassung von Beschleunigungen unterschiedlicher Richtung relativ präzise und einfach realisierbar ist.

Unter einem Substrat wird ein Grund- und/oder Trägerkörper und/oder Gehäuseteil des Beschleunigungssensors verstanden, welcher insbesondere ein im Wesentlichen unstrukturierter Teil des Wafers ist, aus welchem der Beschleunigungssensor ausgebildet ist. Besonders bevorzugt besteht das Substrat aus kristallinem oder polykristallinem Silizium oder einer oder mehreren Schichten Halbleitermaterials und/oder Metall/en.

Das Substrat ist zweckmäßigerweise als äußerer Rahmen des Beschleunigungssensors ausgebildet.

Unter einem Rahmen wird vorzugsweise ein offener oder geschlossener Rahmen verstanden, welcher insbesondere eine oder mehrere seismische Massen oder einen zusätzlichen Rahmen zumindest dreiseitig umfängt und besonders bevorzugt einen im Wesentlichen rechteckigen Innen- und Außenumfang aufweist. Ganz besonders bevorzugt umrahmt der Rahmen bezüglich einer Ebene zumindest teilweise mindestens eine seismische Masse.

Unter einem Federelement wird vorzugsweise ein Torsionsfederelement oder ein Biegefederelement oder ein Federelement verstanden, welches sowohl biegsam, als auch tordierbar ausgebildet ist.

Zumindest die erste seismische Masse ist bevorzugt mittels wenigstens einer Torsionsfeder an dem ersten oder einem zusätzlichen Rahmen aufgehängt, wobei diese Torsionsfeder insbesondere steif bezüglich translatorischer Auslenkungen ausgebildet ist und dadurch eine Entkopplung der Auslenkung der seismischen Masse relativ zum Rahmen gegenüber der Auslenkung des Rahmens relativ zum Substrat oder einem zusätzlichen Rahmen bewirkt. Alternativ vorzugsweise ist die wenigstens eine seismische Masse an Biegefedern aufgehängt.

Es ist bevorzugt, dass mindestens ein Rahmen mittels wenigstens einer Torsionsfeder an einem anderen Rahmen oder dem Substrat aufgehängt ist. Insbesondere weist der Beschleunigungssensor einen zusätzlichen Rahmen auf, welcher mittels wenigstens einer Torsionsfeder an dem ersten Rahmen aufgehängt ist, wobei die zumindest eine seismische Masse an dem zusätzlichen Rahmen mittels wenigstens einer anderen Torsionsfeder aufgehängt ist. Besonders bevorzugt ist der zusätzliche Rahmen um die y-Achse tordierbar aufgehängt und die wenigstens eine seismische Masse um die x-Achse. Hierdurch ist die seismische Masse insgesamt gegenüber dem Substrat rotatorisch um die x- und um die y-Achse auslenkbar. Die seismische Masse ist dabei ganz besonders bevorzugt exzentrisch gegenüber ihrem Massenschwerpunkt aufgehängt, wodurch Beschleunigungen in x- und y-Richtung erfasst werden können. Zusätzlich weist der Beschleunigungssensor hierzu zweckmäßigerweise vier Elektroden auf, welche der wenigstens einen seismischen Masse zugeordnet sind.

Wenigstens die erste seismische Masse ist bevorzugt exzentrisch gegenüber ihrem Massenschwerpunkt aufgehängt. Hierdurch ist die sensitive Richtung, also die Richtung in welcher eine Beschleunigung erfasst werden kann, unterschiedlich zur Richtung der Auslenkung dieser seismischen Masse.

Es ist zweckmäßig, dass die zumindest erste seismische Masse, insbesondere sämtliche seismische Massen, einen Schwerpunkt aufweisen, welcher in z-Richtung außerhalb der durch den jeweiligen zugeordneten Rahmen aufgespannten Ebene und/oder des Raumquaders liegt. Besonders bevorzugt ist eine Seite der ersten bzw. jeder seismischen Masse, ganz besonders bevorzugt die untere Seite bezüglich der z-Richtung, ballig ausgebildet. Alternativ oder zusätzlich ist wenigstens die erste seismische Masse insbesondere kubisch oder in Form eines Quaders oder Kegelstumpfes oder in Form einer stumpfen Pyramide ausgebildet.

Der erste Rahmen ist bevorzugt so aufgehängt, dass die aufgrund der ersten Beschleunigung hervorgerufene Auslenkung eine Richtung aufweist, welche im Wesentlichen parallel zur Torsionsachse der Torsionsaufhängung der wenigstens ersten seismischen Masse ist.

Es ist bevorzugt, dass die Grundfläche des Substrats parallel zur x-y-Ebene eines kartesischen Koordinatensystems ausgerichtet ist und der erste Rahmen in x-Richtung oder y-Richtung auslenkbar am Substrat aufgehängt ist, wobei die erste seismische Masse an dem ersten oder einem zusätzlichen Rahmen wenigstens in z-Richtung auslenkbar aufgehängt ist und der Beschleunigungssensor zumindest zwei Elektroden aufweist, welche im Wesentlichen insbesondere plattenförmig ausgebildet, im Wesentlichen parallel zur x-y-Ebene angeordnet und der ersten seismischen Masse als Ausleseeinrichtung zugeordnet sind. Die Elektroden sind besonders bevorzugt in z-Richtung unterhalb und/oder oberhalb der ersten seismischen Masse angeordnet. Ganz besonders bevorzugt ist jeweils eine der Elektroden bezogen auf die x-y-Ebene an der einen Seite der Torsionsachse angeordnet und die andere Elektrode auf der anderen Seite. Hierdurch können gegenläufige Kapazitätsänderungen erfasst werden, wodurch die absolute, möglicherweise sich mit der Zeit verändernde, Kapazität nicht berücksichtigt zu werden braucht. Es kann somit eine differentielle Signalverarbeitung durchgeführt werden.

Es ist zweckmäßig, dass zumindest eine der Elektroden in z-Richtung oberhalb und wenigstens eine andere der Elektroden in z-Richtung unterhalb der seismischen Masse angeordnet ist. Durch diese Ausbildung ist sowohl ein differentielles Erfassen der Auslenkung der seismischen Masse, als auch die Ausbildung des Beschleunigungssensors bzw. von Elektroden des Beschleunigungssensors auf einer relativ kleinen Fläche, insbesondere bezüglich der x-y-Ebene, möglich.

Der Beschleunigungssensor weist zweckmäßigerweise zumindest eine Kammstruktur als Ausleseeinrichtung/en auf, welche dem ersten Rahmen zugeordnet und mit diesem verbunden ist/sind.

Der Beschleunigungssensor umfasst bevorzugt wenigstens ein Paar seismische Massen, welche eine relativ zueinander gegenläufige oder alternativ gleichförmige Auslenkungsrichtung bzw. -orientierung aufweisen. Dabei sind diese Auslenkungen insbesondere rotatorische bzw. torsionale Auslenkungen.

Es ist zweckmäßig, dass die zumindest erste seismische Masse und eine zweite seismische Masse jeweils an dem ersten Rahmen oder einem zusätzlichen Rahmen aufgehängt sind.

Der Beschleunigungssensor umfasst vorzugsweise einen ersten Rahmen, welcher am Substrat so aufgehängt ist, dass dieser, insbesondere im Wesentlichen ausschließlich, in x-Richtung auslenkbar ist, wobei der Beschleunigungssensor zusätzlich einen zweiten Rahmen aufweist, welcher im Innenbereich des ersten Rahmens angeordnet ist und an diesem so aufgehängt ist, dass er, insbesondere im Wesentlichen ausschließlich, in y-Richtung auslenkbar ist, und wobei im Innenbereich des zweiten Rahmens wenigstens eine seismische Masse angeordnet ist, die am zweiten Rahmen mittels wenigstens einer Torsionsfeder aufgehängt ist und, insbesondere im Wesentlichen ausschließlich, in z-Richtung rotatorisch auslenkbar ist. Durch diese Ausbildung ist der Beschleunigungssensor in zwei Richtungen bezüglich relativ großer Beschleunigungen empfindlich und in wenigstens eine Richtung hinsichtlich relativ geringer Beschleunigungen. Diese Ausbildungsform eignet sich insbesondere als integrierter, kombinierter ESP-Airbag-Beschleunigungssensor. Besonderes bevorzugt weist der Beschleunigungssensor vier seismische Massen auf, welche jeweils am zweiten Rahmen aufgehängt sind, wobei der zweite Rahmen ein Außenrahmensegment und ein Innenrahmensegment umfasst, die insbesondere einstückig miteinander verbunden sind, und jeweils zwei seismische Massen mit einer Torsionsachse im Wesentlichen parallel zur x-Achse und jeweils zwei seismische Massen mit einer Torsionsachse im Wesentlichen parallel zur y-Achse aufgehängt sind.

Es ist bevorzugt, dass zumindest die erste seismische Masse wenigstens auf ihrer, den Elektroden gegenüberliegenden Oberfläche, Gräben aufweist, welche insbesondere jeweils zueinander im Wesentlichen parallel ausgebildet sind. Durch eine definierte geometrische Ausbildung dieser Gräben lässt sich, besonders bevorzugt über die Anzahl und Breite dieser Gräben, eine definierte Dämpfung hinsichtlich der Auslenkung der seismischen Masse einstellen.

Zumindest ein Federelement, an welchem eine seismische Masse oder ein Rahmen aufgehängt ist, und/oder wenigstens eine Torsionsfeder, an welcher eine seismische Masse oder ein Rahmen aufgehängt ist, weist/ weisen zweckmäßigerweise mindestens ein piezosensitives Element auf. Das zumindest eine piezosensitive Element ist insbesondere ein piezoresistives Element oder ein piezoelektrisches Element. Ein piezoresistives Element umfasst dabei besonders bevorzugt mindestens eine Widerstandsbrücke, welche besonders bevorzugt auf einer oder mehreren Federelementen bzw. Torsionsfedern aufgebracht ist. Mittels eines piezosensitiven Elements kann die Auslenkung einer seismischen Masse oder eines Rahmen ohne eine zusätzliche Ausleseeinrichtung, in Form einer Kammstruktur oder einer Elektrode, erfasst werden, bzw. ein solches piezosensitives Element kann eine Ausleseeinrichtung in Form einer kapazitiven Struktur ersetzen, wodurch die Fläche bzw. Chipfläche des Beschleunigungssensors, insbesondere bezüglich der x-y-Ebene, relativ klein gehalten werden kann.

Die piezosensitiven Elemente, die als piezoresistive Elemente ausgebildet sind, werden zweckmäßigerweise durch Lithographie-Verfahren und örtlich begrenzte Dotierung der Siliziumoberfläche hergestellt. Die typischen Widerstandswerte liegen im einstelligen kΩ-Bereich.

Piezosensitive Elemente, die als piezoelektrische Elemente ausgebildet sind, werden dagegen bevorzugt durch Dünnschichtabscheidungen auf der Oberfläche realisiert und anschließend mittels Lithographie- und im Weiteren über Nass- oder Trocken-Ätz-Verfahren strukturiert. Solche Dünnfilme können beispielsweise Aluminium-Nitrid oder insbesondere Blei-Zirkonium-Titanat (PZT) sein und werden besonders bevorzugt von sub-mikrometer- bis mehreren 10 Mikrometern Dicke abgeschieden.

Der Beschleunigungssensor umfasst vorzugsweise zwei vorgeschlagene Beschleunigungs-Teilsensoren, welche insbesondere ein gemeinsames Substrat aufweisen, wobei diese beiden Beschleunigungs-Teilsensoren im Wesentlichen orthogonal zueinander angeordnet sind und gemeinsam einen integrierten Beschleunigungssensor bilden.

Der Beschleunigungssensor ist zweckmäßigerweise als monolithischer Sensor ausgebildet.

Es ist bevorzugt, dass der Beschleunigungssensor als ein Mikro-Elektro-Mechanisches-System (MEMS) oder MEMS-Modul ausgebildet ist, welches insbesondere mechanische und elektronische Mittel zum Anschluss und/oder zum Zusammenwirken an/mit weiteren MEMS-Modulen und/oder mit mindestens einer elektronischen Signalverarbeitungsschaltung aufweist.

Es ist zweckmäßig, dass die Torsionsachse entlang der wenigstens einen Torsionsfeder, an denen die zumindest erste seismische Masse aufgehängt ist, sich nicht in den Ebenen, welche durch den jeweiligen Massenschwerpunkt, im jeweilig unausgelenkten Zustand der seismischen Masse, und der x-Achse als Ebenennormalen definiert sind, befindet.

Vorzugsweise ist der Beschleunigungssensor fest bzw. steif mit dem System bzw. Inertialsystem verbunden, auf welches die eine oder mehreren zu erfassenden Beschleunigungen einwirken. Besonders bevorzugt handelt es sich dabei um ein Kraftfahrzeugchassis.

Der erfindungsgemäße Beschleunigungssensor ist zur Verwendung in der Automatisierungstechnik, in Kraftfahrzeugen und Luftfahrzeugen, insbesondere in den jeweiligen entsprechenden Regelungssystemen, vorgesehen. Besonders bevorzugt ist der erfindungsgemäße Beschleunigungssensor zur Verwendung in einem Kraftfahrzeugregelungssystem vorgesehen, das zumindest Teile eines Bremssystems umfasst, ganz besonders bevorzugt zumindest als kombinierter, integrierter Airbag-ESP-Beschleunigungssensor.

Weitere bevorzugte Ausführungsformen ergeben sich aus den Unteransprüchen und der nachfolgenden Beschreibung von Ausführungsbeispielen an Hand von Figuren.

Es zeigen in schematischer Darstellung
- Fig. 1, 2: ein Ausführungsbeispiel eines Beschleunigungssensors mit lediglich einer ersten seismischen Masse,
- Fig. 3: der beispielhafte Beschleunigungssensor aus Fig. 1 und 2 in einem Schnitt,
- Fig. 4: ein Ausführungsbeispiel mit einer seismischen Masse, welcher jeweils in z-Richtung oberhalb und unterhalb zwei Elektroden zugeordnet sind,
- Fig. 5, 6: ein Ausführungsbeispiel mit zwei seismischen Massen, sowie beispielhafte Auslenkungen dieser seismischen Massen aufgrund einwirkender Beschleunigungen,
- Fig. 7: das Ausführungsbeispiel aus Fig. 5 und 6 in der Draufsicht,
- Fig. 8, 9: die beispielhafte Ausbildung einer seismischen Masse mit definierten Gräben auf ihrer Oberseite, gegenüber den Ausleseelektroden,
- Fig. 10: eine seismische Masse, mit beispielgemäß gegenüber der x-y-Ebene im unausgelenkten Zustand nicht ausgelagerten Masse,
- Fig. 11: ein Ausführungsbeispiel, bei welchem einer flach ausgebildeten seismischen Masse, welche exzentrisch gegenüber ihrem Schwerpunkt aufgehängt ist, jeweils eine Elektrode oberhalb und unterhalb zugeordnet ist,
- Fig. 12, 13: beispielhafte Beschleunigungssensoren, umfassend jeweils zwei integrierte Beschleunigungs-Teilsensoren,
- Fig. 14: ein Ausführungsbeispiel eines Beschleunigungssensors mit zwei auslenkbar aufgehängten Rahmen und vier seismischen Massen,
- Fig. 15: die beispielhafte Aufhängung eines Rahmens mittels Federelementen, welche piezosensitive Elemente als Ausleseeinrichtungen aufweisen,
- Fig. 16: ein Ausführungsbeispiel, dessen seismische Masse mittels einer Torsionsfeder aufgehängt ist, die ebenfalls piezosensitive Elemente aufweist, und
- Fig. 17: einen beispielhaften Beschleunigungssensor, welcher einen zusätzlichen Rahmen aufweist, welcher an einem ersten Rahmen mittels Torsionsfedern aufgehängt ist.

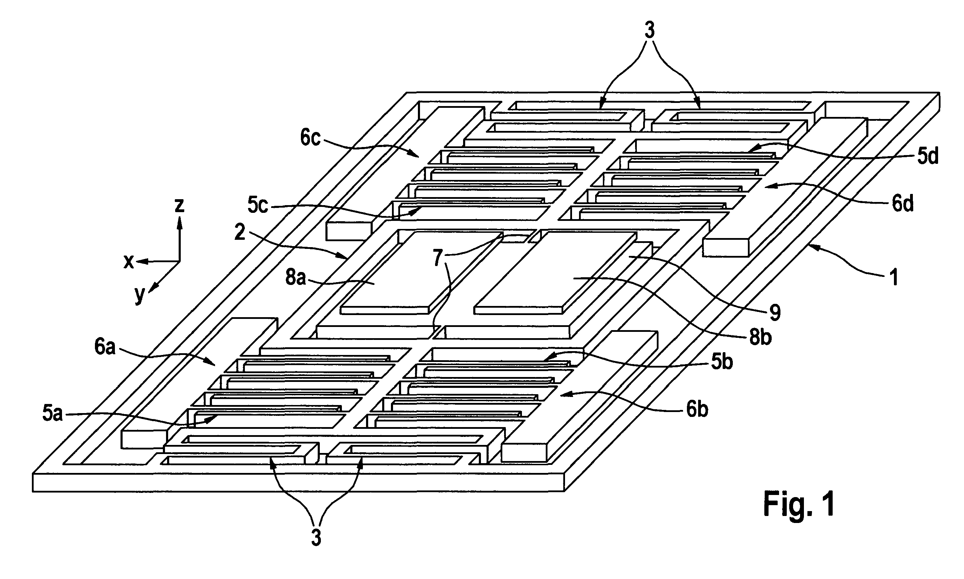

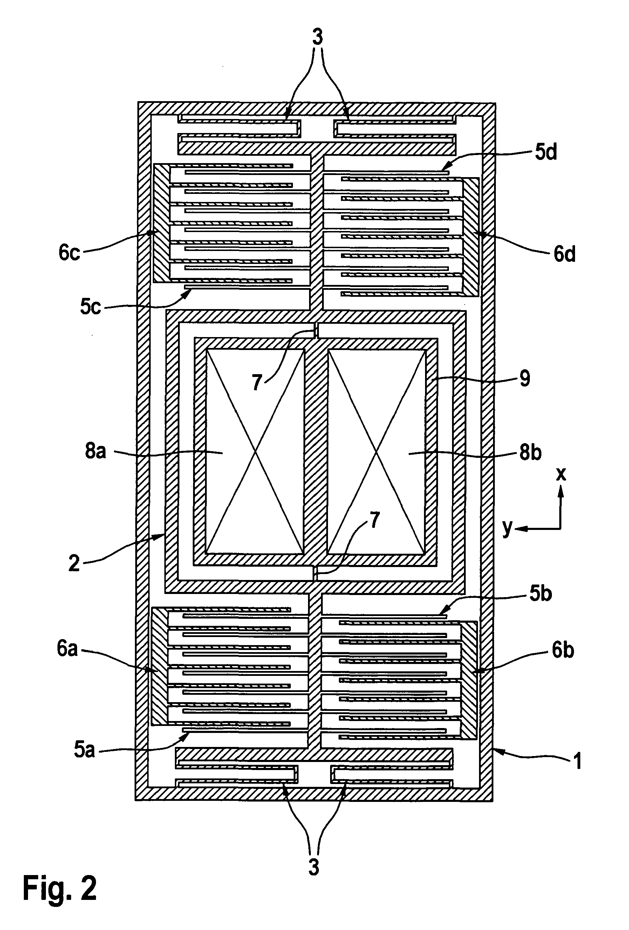

In Fig. 1 ist ein Ausführungsbeispiel eines Beschleunigungssensors in einer räumlichen Darstellung veranschaulicht und in Fig. 2 in der Draufsicht. Dieser Beschleunigungssensor umfasst ein als Rahmen 1 ausgebildetes Substrat. Substratrahmen 1 ist dabei wie abgebildet zum kartesischen x-y-z-Koordinatensystem ausgerichtet. Außerdem ist Substrat bzw. Rahmen 1 beispielgemäß mit dem Inertialsystem, auf das die zu erfassenden Beschleunigungen primär wirken, fest und steif direkt oder indirekt verbunden. Innerhalb des Substratrahmens 1 ist ein erster auslenkbarer Rahmen 2 mittels Federelementen 3 an diesem aufgehängt. Federelemente 3 lassen eine Bewegung des Rahmens 2 bzw. des ersten auslenkbaren Rahmens in Richtung einer Messrichtung parallel zur y-Achse zu, sind aber steif in Raumrichtungen x und z ausgebildet. Die Messrichtung parallel zur y-Achse entspricht der Richtung zur Erfassung relativ großer Beschleunigungen (High-G). Parallel zur x-Richtung weist der Beschleunigungssensor zusätzlich eine Messrichtung zur Erfassung relativ geringer Beschleunigungen (Low-G) auf. An Rahmen 2 sind Kammstrukturen 5a, 5b, 5c und 5d befestigt. Weitere Kammstrukturen 6a, 6b, 6c und 6d sind fixiert gegenüber einem nicht dargestellten Gehäuse und damit gegenüber dem Inertialsystem und elektrisch isoliert gegenüber dem Rahmen 2. Jede gegenüber dem Inertialsystem fixierte Kammstruktur 6 bildet einen Kondensator mit der beweglichen Kammstruktur 5 aus. Im Zuge einer Relativbewegung zwischen Rahmen 2 und Substratrahmen 1 verändern sich die Kapazitäten der Kondensatoren 5a/6a und 5c/6c in gleicher Weise, ebenso verhalten sich die Kondensatoren 5b/6b und 5d/6d. Dagegen verändern sich die Kapazitäten der Kondensatoren 5b/6b und 5d/6d dabei invers zu den Kapazitäten von 5a/6a und 5c/6c. Damit können die Kondensatoren differentiell ausgewertet werden. Wirkt auf den Sensor in y-Richtung eine Beschleunigung, wird Rahmen 2 gegenüber Substratrahmen 1 in y-Richtung mit inverser Orientierung (-y) ausgelenkt, und es kommt zu Kapazitätsänderungen der Kammstrukturen bzw. Kondensatoren 5a/6a, 5d/6d, 5b/6b und 5c/6c, entsprechend den Kondensatorplattenanordnungen 5 zu 6.

Im Fall einer einwirkenden Beschleunigung in x-Richtung blockieren Federelemente 3 eine Bewegung des Rahmens 2. Dadurch bleiben die Detektions-Kondensatoren 5 und 6 in Ruhe bzw. weisen keine Kapazitätsänderungen auf und es wird kein Signal im High-G-Element erzeugt. Des Weiteren ist über eine Torsionsfeder 7 eine seismische Masse 9 an Rahmen 2 aufgehängt, wobei die Torsionsachse parallel zur y- Achse ausgebildet ist. Die seismische Masse 9 besitzt einen bezüglich der Torsionsfeder 7 ausgelagerten Massenschwerpunkt 10. Wirkt eine Beschleunigung in x-Richtung, so wird die seismische Masse 9 um die Torsionsachse der Torsionsfeder 7 rotatorisch ausgelenkt. Hierdurch ändert sich der Spaltabstand der seismischen Masse 9 zu den Elektroden 8a und 8b. Je nachdem, mit welcher Orientierung die Beschleunigung wirkt, wird dadurch der Kapazitätswert, gemessen zwischen seismischer Masse 9 und der Elektrode 8a größer oder kleiner, bzw. zwischen der seismischen Masse 9 und der Elektrode 8b, gegenläufig zu 8a, kleiner oder größer. Somit kann durch Differenzbildung wiederum die Grundkapazität eliminiert werden und nur die Summen der Kapazitätsdifferenzen gemessen werden.

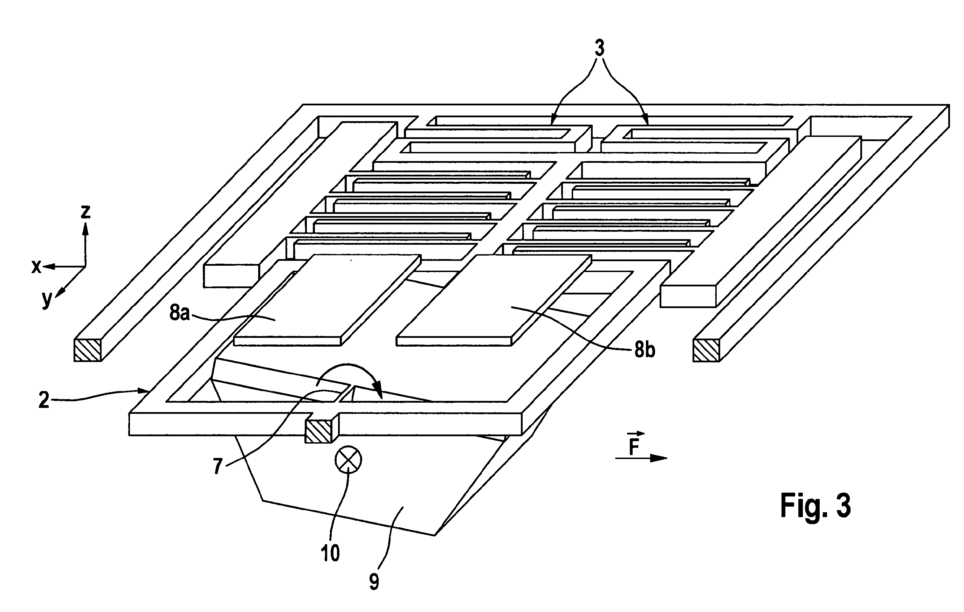

In Fig. 3 ist der anhand der Fig. 1 und 2 erläuterte, beispielhafte Beschleunigungssensor in einer aufgeschnittenen räumlichen Darstellung veranschaulicht. Die seismische Masse 9 besitzt einen bezüglich der Torsionsfeder 7 ausgelagerten Massenschwerpunkt 10, wie dies in Ergänzung zur Fig. 1 in Fig. 2 dargestellt ist. Dieser Massenschwerpunkt 10 befindet sich dabei in der Ebene, welche durch die Torsionsachse der Torsionsfeder 7 und die z-Achse, welche eine Normale zur Strukturoberfläche bildet, aufgespannt wird. Bei Einwirkung einer Kraft F aufgrund einer Beschleunigung in x-Richtung wird die seismische Masse 9 rotatorisch ausgelenkt und diese Auslenkung wird durch Elektroden 8a und 8b differentiell erfasst.

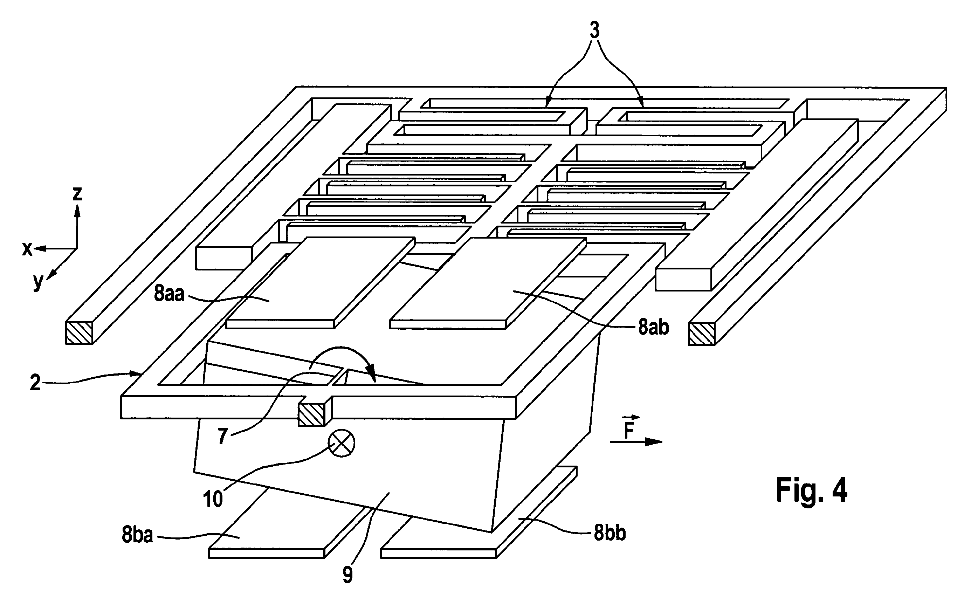

Fig. 4 zeigt einen beispielhaften Beschleunigungssensor, welcher sich von dem in Fig. 1 bis 3 dargestellten Beschleunigungssensor durch zwei zusätzliche, in z-Richtung unterhalb seismischer Masse 9 angeordnete Elektroden 8ba, 8bb unterscheidet. Seismische Masse 9 weist dabei ebenfalls einen gegenüber ihrer Torsionsaufhängung 7 an Rahmen 2 ausgelagerten Massenschwerpunkt 10 auf. Elektroden 8aa, 8ab, 8ba und 8bb erfassen die rotatorische Auslenkung der seismischen Masse 9 durch eine einwirkende Beschleunigung in x-Richtung differentiell. Durch die Erfassung der Auslenkung der seismischen Masse 9 mittels Elektroden 8aa, 8ab, 8ba und 8bb wird eine größere Signalamplitude des x-Richtungs-Beschleunigungssignals erzeugt, gegenüber einer Erfassung mit zwei Elektroden. Dies wird beispielgemäß dazu genutzt, den Beschleunigungssensor, insbesondere den an Rahmen 2 aufgehängten in x-Richtung sensitiven Teil, mit kleineren Abmessungen auszubilden und dennoch eine hinreichend große Signalamplitude des x-Richtungs-Beschleunigungssignals zu erhalten. Die Elektroden 8a, 8ab sowie 8ba und 8bb sind jeweils bezüglich der x-Richtung rechts und links von der durch Torsionsfeder 7 vorgegebenen Torsionsachse der seismischen Masse 9 angeordnet.

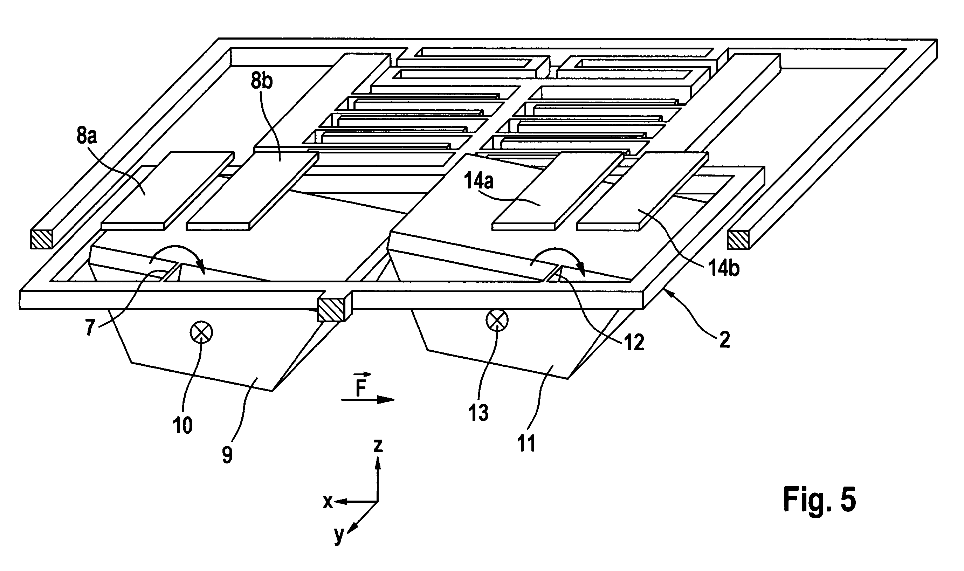

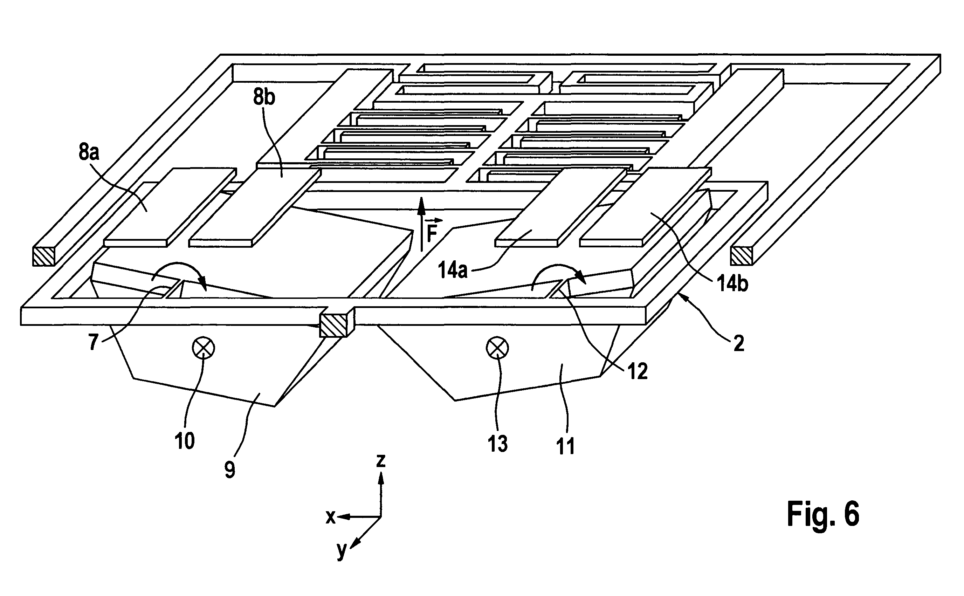

Fig. 5 und 6 zeigen den Aufbau eines alternativen, beispielhaften Beschleunigungssensors mit zwei seismischen Massen 9 und 11. Die Torsionsachsen entlang der Torsionsfedern 7 und 12, an denen seismische Massen 9 und 11 an Rahmen 2 aufgehängt sind, befinden sich hierbei nicht in den Ebenen, welche durch den jeweiligen Massenschwerpunkt 10, 13, im jeweilig unausgelenkten Zustand der seismischen Massen 9, 11, und der x-Achse als Ebenennormalen definiert sind. Die beiden seismischen Massen 9 und 11 sind spiegelsymmetrisch bezüglich einer y-z-Ebene durch den Mittelpunkt des Sensors ausgebildet und aufgehängt. Wirkt eine Beschleunigung in x-Richtung, so tordieren Torsionsfedern 7 und 12 mit gleicher Orientierung und die Kapazitäten 9/ 8a und 11/ 14a, respektive 9/ 8b und 11/ 14b ändern sich gleichsinnig, wie dies in Fig. 5 veranschaulicht ist. Wirkt eine Beschleunigung in z-Richtung, so werden Torsionsfedern 7 und 12 mit gegensätzlicher Orientierung tordiert bzw. rotatorisch ausgelenkt, wie dies in Fig. 6 gezeigt wird, und die Kapazitäten 9/ 8a und 11/ 14a, respektive 9/ 8b und 11/ 14b ändern sich gegensinnig bzw. invers. Durch diese unterschiedlichen Auslenkungsarten kann die Beschleunigungsrichtung bestimmt werden. Durch den Abstand der Torsionsachsen von den Ebenen, in denen sich die Massenschwerpunkte 10 und 13 befinden und welche eine Flächennormale in x-Richtung aufweisen, kann die Empfindlichkeit eingestellt werden. Elektroden 8a, 8b und 14a, 14b werden in ihrer Fläche und Position zu den Torsionsachsen seismischer Massen 9, 11 so angepasst, dass die gegenläufige Kapazitätsänderung sowohl für 9/ 8a und 9/ 8b, respektive 9/ 14a und 9/ 14b identisch ist.

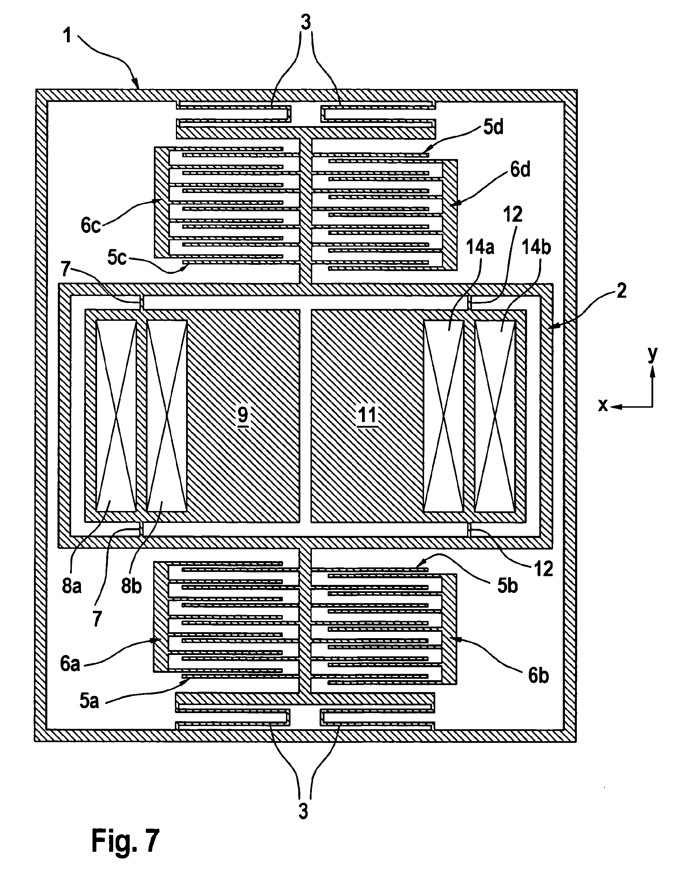

Fig. 7 zeigt das Ausführungsbeispiel aus Fig. 5 und 6 in der Draufsicht.

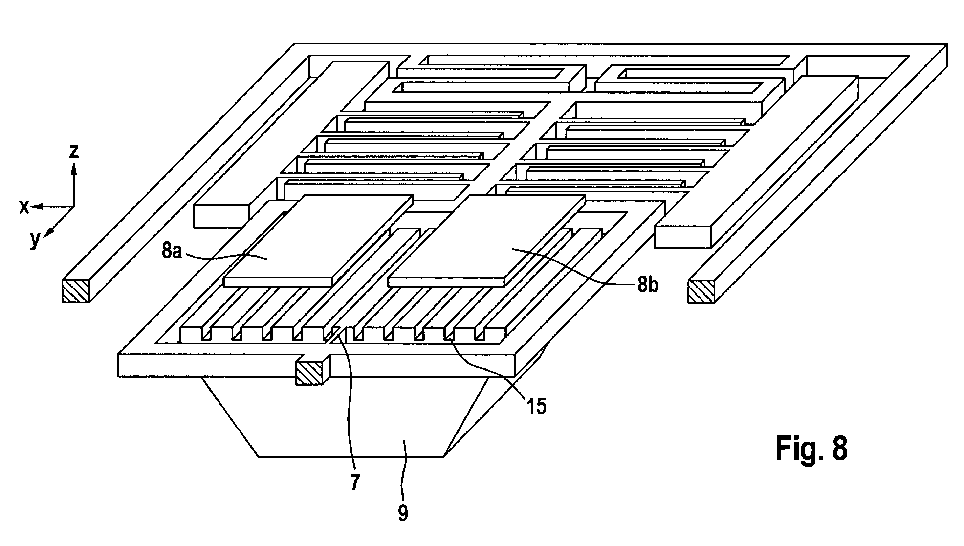

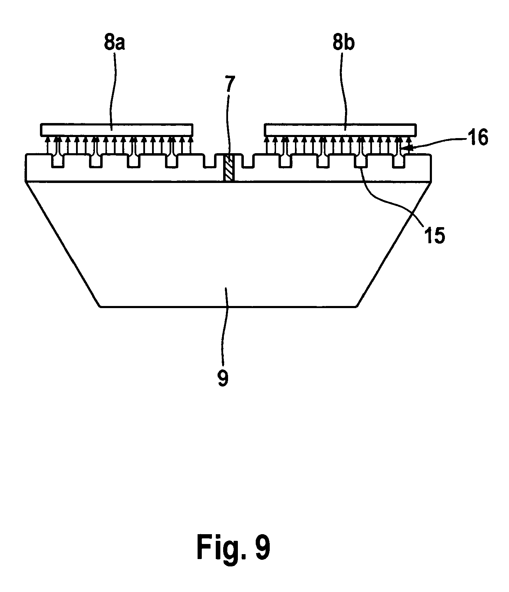

Anhand der Fig. 8 und 9 wird eine beispielhafte Ausbildung der ersten seismischen Masse 9 zur Einstellung einer definierten Dämpfung bezüglich der Auslenkung der ersten seismischen Masse 9 bei Erfassung einer relativ geringen Beschleunigung erläutert. Durch Strukturierung der Strukturoberfläche mit Gräben 15 bzw. Kanälen, welche beispielgemäß parallel oder alternativ, nicht dargestellt, senkrecht zu der Torsionsachse 7 verlaufen, kann das zwischen den Elektroden 8a und 8b und der Strukturoberfläche der seismischen Masse 9 befindliche Gas leichter entweichen. Dadurch wird eine Auslenkung der ersten seismischer Masse 9 in z-Richtung entdämpft. Bei günstiger Einstellung der Spaltbreite zwischen Elektrode 8a, 8b und seismischer Masse 9 verändert sich die Kapazität geringfügigern als die Kapazitätsplattenfläche, d. h. die der Elektrode 8 gegenüberliegende Teilfläche der Oberseite der seismischen Masse 9. Dies wird durch parasitäre Felder 16 an den Kanten der Gräben 15 verursacht.

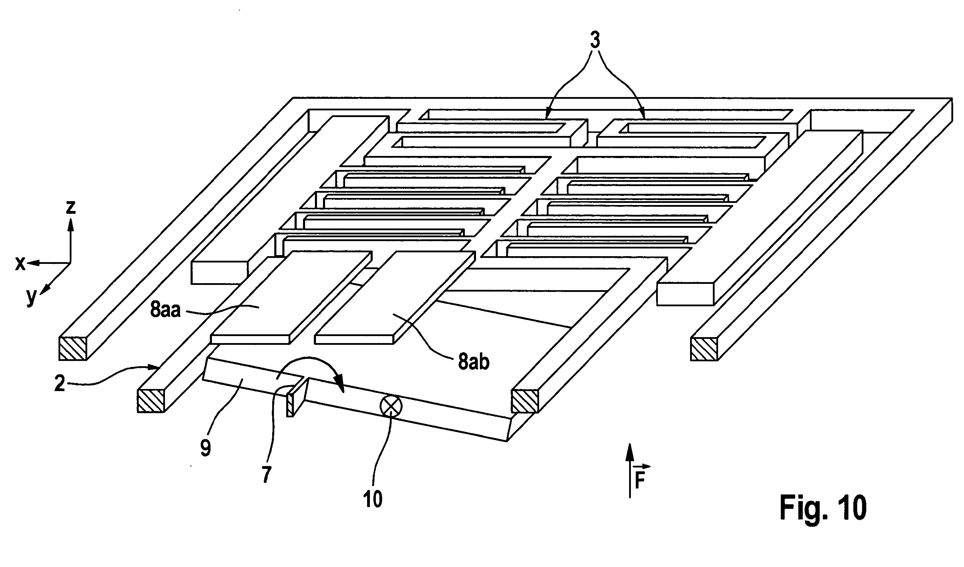

In Fig. 10 ist ein Ausführungsbeispiel eines Beschleunigungssensors teilweise bzw. in aufgeschnittener Weise dargestellt, dessen seismische Masse 9 plattenförmig bzw. in z-Richtung flach ausgebildet ist und einen Massenschwerpunkt 10 aufweist, der nicht auf der Torsionsachse der Torsionsfeder 7 liegt, an welcher seismische Masse 9 an Rahmen 2 aufgehängt ist. Dabei liegt Massenschwerpunkt 10 im unausgelenkten Zustand der seismischen Masse 9 allerdings im Wesentlichen in einer Ebene parallel zur x-y-Ebene, durch welche die Torsionsachse der Torsionsfeder 7 verläuft. Die Elektroden 8aa und 8ab sind bezüglich ihrer Fläche und Position zur Torsionsachse so angepasst, dass die gegenläufige Kapazitätsänderung sowohl für 9/ 8aa und 9/ 8ab identisch ist. Durch diese Anordnung ist das, durch die an Rahmen 2 aufgehängte seismische Masse 9 ausgebildete, Teilsensorelement zur Erfassung relativ geringer Beschleunigungen empfindlich in z-Richtung ausgelegt.

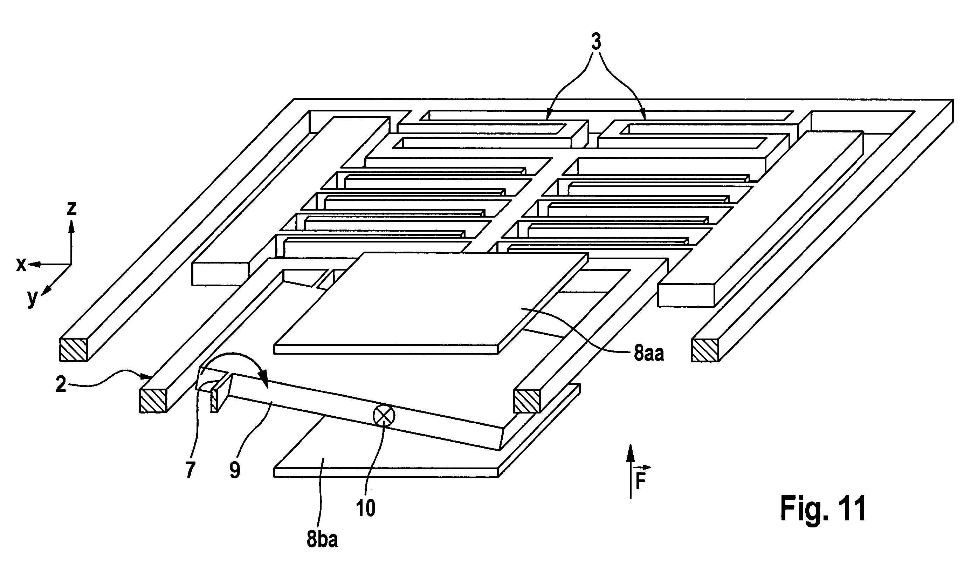

Fig. 11 zeigt ein zu dem in Fig. 10 dargestellten Beschleunigungssensor alternatives Ausführungsbeispiel, bei welchem in z-Richtung ober- und unterhalb flach ausgebildeter seismischer Masse 9 jeweils eine Elektrode 8aa und 8ba angeordnet ist. Diese Elektroden 8aa, 8ba sind dabei in x-Richtung jeweils auf einer Seite, beispielgemäß dargestellt rechts, von der durch Torsionsfeder 7 definierten Torsionsachse der seismischen Masse 9 angeordnet.

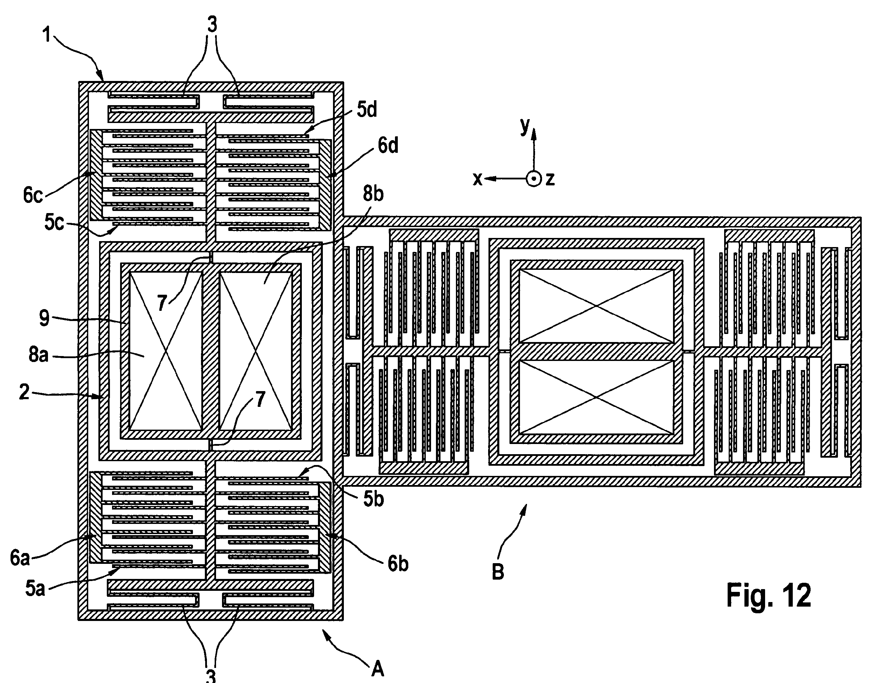

In Fig. 12 wird ein Ausführungsbeispiel eines integrierten Beschleunigungssensors veranschaulicht, welcher aus zwei zueinander in der x-y-Ebene orthogonal angeordneten und beispielgemäß identisch aufgebauten Beschleunigungs-Teilsensoren A, B besteht. Dieser Beschleunigungssensor ist auf einem gemeinsamen Chip ausgebildet und weist jeweils eine Messrichtung parallel zur x- und y- Achse sowohl für betragsmäßig relativ große als auch für betragsmäßig relativ kleine Beschleunigungen auf. Damit werden die Empfindlichkeitsrichtungen in x-und y-Richtung sowohl für die Low-G, als auch für die High-G Messung ausgerichtet. In Beschleunigungs-Teilsensor A ist mittels Torsionsfeder 7 seismische Masse 9 an Rahmen 2 aufgehängt, wobei die Torsionsachse parallel zur y- Achse ausgebildet ist. Die seismische Masse 9 besitzt einen bezüglich der Torsionsfeder 7 ausgelagerten Massenschwerpunkt. Wirkt eine vorzugsweise relativ geringe Beschleunigung (Low-G) in x-Richtung, so wird die seismische Masse 9 um die Torsionsachse der Torsionsfeder 7 rotatorisch ausgelenkt. Hierdurch ändert sich der Spaltabstand seismischer Masse 9 zu den Elektroden 8a und 8b. Je nachdem, mit welcher Orientierung die Beschleunigung wirkt, wird dadurch der Kapazitätswert, gemessen zwischen seismischer Masse 9 und der Elektrode 8a größer oder kleiner, bzw. zwischen der seismischer Masse 9 und der Elektrode 8b, gegenläufig zu 8a, kleiner oder größer. Rahmen 2 ist mittels Federn 3 in y-Richtung auslenkbar an Substrat 1 aufgehängt. Kammstrukturen 5a-d und 6a-d erfassen dabei als Ausleseeinrichtungen die Auslenkung des Rahmens in y-Richtung und damit vorzugsweise relativ große Beschleunigungen (High-G). Damit werden die Empfindlichkeitsrichtungen entlang der y-Richtung und der x-Richtung für High-G-Messung ausgerichtet und entlang der x-Richtung und der y-Richtung für die Low-G-Messung.

Alternativ können auch Beschleunigungssensoren, wie sie anhand einer der vorherigen Figuren 1 bis 11 und Figuren 15 bis 17 beschrieben sind, kombiniert werden und orthogonal zueinander auf einem Chip angeordnet werden.

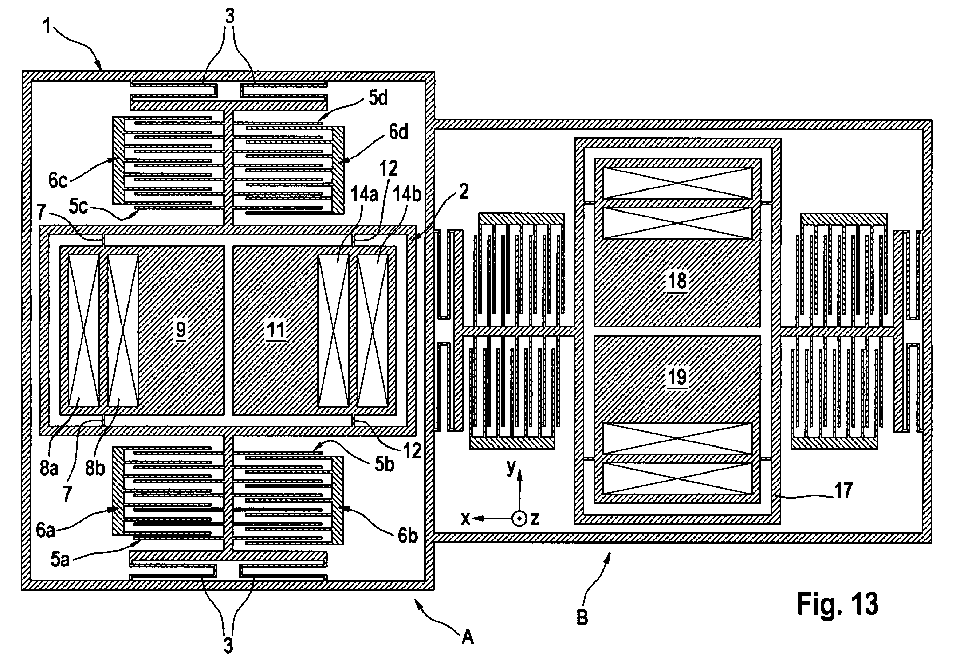

Fig. 13 zeigt ein Ausführungsbeispiel, bei welchem der in Fig. 12 abgebildete Sensor durch eine zweite seismische Masse 11 ergänzt wird, die jeder Beschleunigungs-Teilsensor A und B umfasst. Beschleunigungs-Teilsensoren A und B sind dabei beispielgemäß identisch ausgebildet, auf einem gemeinsamen Chip angeordnet und bilden einen beispielhaften, integrierten Beschleunigungssensor. Die Beschleunigungs-Teilsensoren sind jeweils entsprechend dem anhand der Fig. 5, 6 und 7 beschriebenen Beschleunigungssensor ausgebildet. Der beispielgemäße Sensor ist entsprechend so ausgebildet, dass er betragsmäßig relativ große Beschleunigungen (High-G) in x- und y-Richtung durch Erfassung der Auslenkungen der Rahmen 2 und 17 erfassen kann und betragsmäßig relativ kleine Beschleunigungen (Low-G) in x-, y- und z-Richtung durch Erfassung der Auslenkungen seismischer Massen 9, 11 und 18, 19. Es werden somit fünf Beschleunigungsinformationen für drei Beschleunigungsrichtungen gewonnen, wodurch eine Plausibilisierung der Signale und Informationen durchgeführt werden kann.

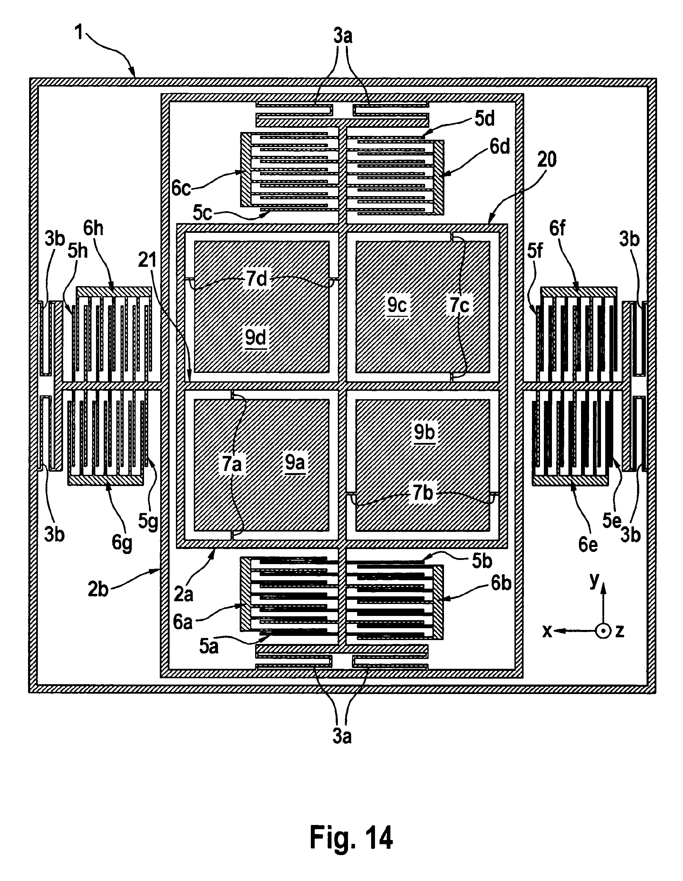

Zur Reduzierung des Flächenbedarfes sind bei dem in Fig. 14 dargestellten Beschleunigungssensor die vier seismischen Massen 9a, 9b, 9c, 9d an einem gemeinsamen Rahmen 2a aufgehängt. Dieser umfasst dabei ein Außenrahmensegment 20 und ein Innenrahmensegment 21, welche einstückig miteinander verbunden sind. Darüber hinaus weist der beispielhafte Beschleunigungssensor einen zusätzlichen Rahmen 2b, als ersten Rahmen auf, welcher an Substratrahmen 1 mittels Federelementen 3b in x-Richtung auslenkbar aufgehängt ist. Rahmen 2a ist wiederum an Rahmen 2b in y-Richtung mittels Federelementen 3a auslenkbar aufgehängt. Durch die Auslenkung der beiden Rahmen können relativ große Beschleunigungen in x- und y Richtung erfasst werden. Substratrahmen 1 ist beispielgemäß indirekt mit dem Chassis eines Kraftfahrzeugs als Inertialsystem, dessen Beschleunigungen erfasst werden sollen, fest und steif verbunden. Auslese- bzw. Detektionsseinrichtungen 5a-d und 6a-d dienen zur Messung der High-G-Beschleunigung in y-Richtung und die Auslese- bzw. Detektionseinrichtungen 5e-h und 6e-h dienen zur Messung der High-G-Beschleunigung in x-Richtung. Seismische Massen 9a und 9c tordieren um die Torsionsfedern 7a, 7c bei Beschleunigungen in x-Richtung und die seismische Massen 9b, 9d tordieren um die Torsionsfedern 7b, 7d bei Beschleunigungen in y-Richtung. Bei Beschleunigungen in z-Richtung tordieren alle seismischen Massen 9a - 9d um die Torsionsfedern 7a - 7d gemeinsam in z-Richtung mit gleicher Orientierung.

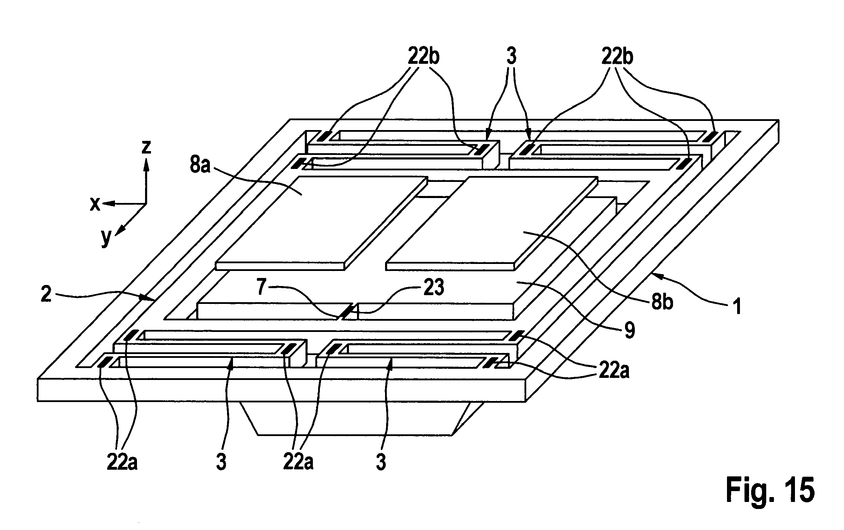

Fig. 15 zeigt ein Ausführungsbeispiel eines Beschleunigungssensors, umfassend Substratrahmen 1, Rahmen 2, seismische Masse 9, welche mittels Torsionsfeder 7 an Rahmen 2 aufgehängt ist, sowie Elektroden 8a und 8b, zusammenwirkend mit seismischer Masse 9, als Ausleseeinrichtung. Beispielgemäß ist Rahmen 2 an Substrat 1 mittels Federelementen 3 aufgehängt, welche als Ausleseeinrichtungen piezosensitive Elemente 22a und 22b aufweisen, die beispielgemäß jeweils als piezoresistive Bereiche durch Dotierung der entsprechenden Oberfläche des Federelements 3 auf diesem ausgebildet sind. Durch diese piezosensitiven Elemente 22a und 22b wird die Auslenkung des Rahmens 2 in y-Richtung erfasst. Zusätzliche Kammstrukturen aus Ausleseeinrichtungen werden nicht benötigt.

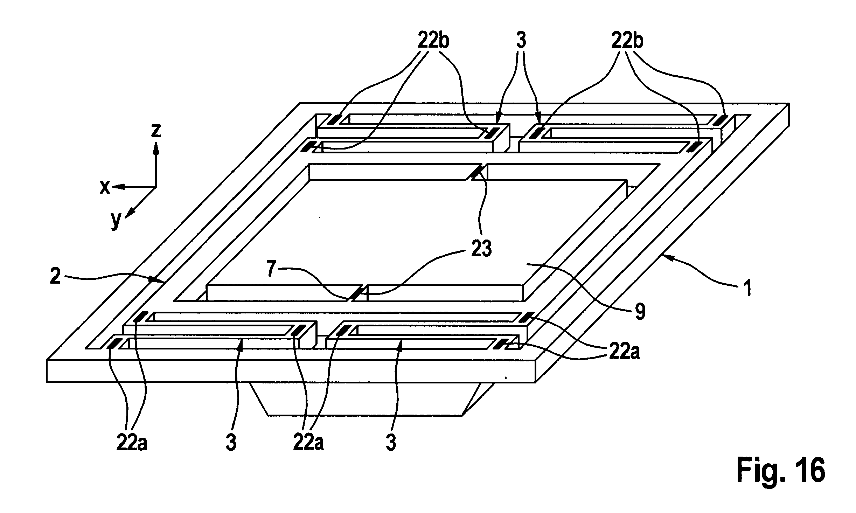

Bei dem in Fig. 16 dargestellten, beispielhaften Beschleunigungssensor weist im Unterschied zu dem in Fig. 15 gezeigten Ausführungsbeispiel Torsionsfeder 7 zusätzlich piezosensitive Elemente 23 auf, weshalb Elektroden 8a und 8b aus Fig. 15 nicht mehr nötig sind, da mittels piezosensitiver Elemente 23 rotatorische Auslenkungen der seismischen Masse 9 erfasst werden.

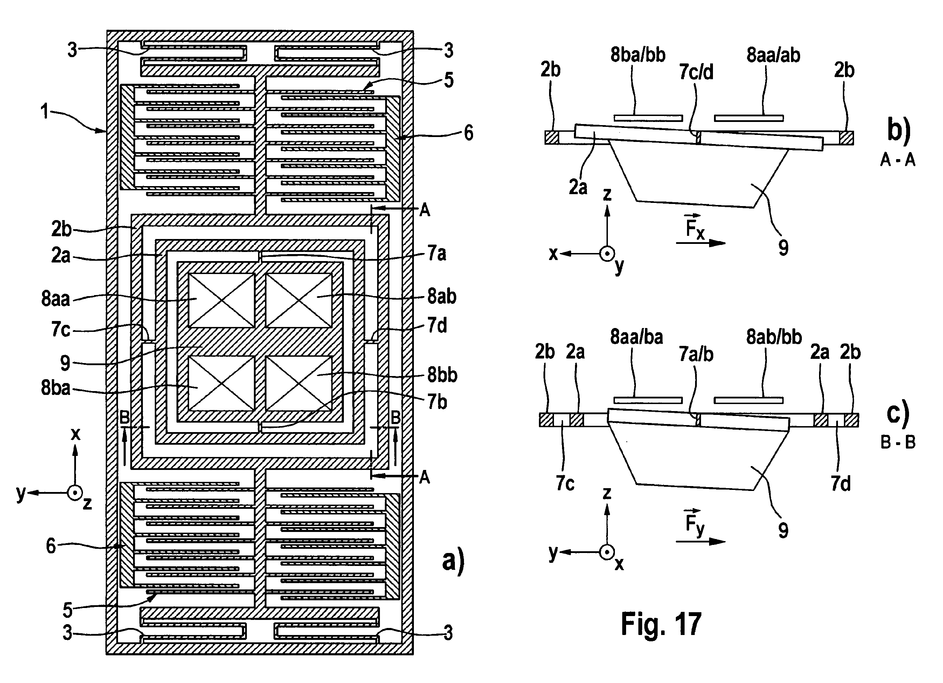

Fig. 17 a) zeigt einen beispielhaften Beschleunigungssensor, bei welchem ein erster Rahmen 2b an Substratrahmen 1 mittels Federelementen 3 aufgehängt ist. Im Innenbereich vom ersten Rahmen 2b ist ein zusätzlicher Rahmen 2a mittels Torsionsfedern 7c und 7d am ersten Rahmen 2b aufgehängt. Am zusätzlichen Rahmen 2a ist die seismische Masse 9 mittels Torsionsfedern 7a, 7b aufgehängt. Dabei sind der seismischen Masse 9 vier E-lektroden 8aa, 8ab, 8ba und 8bb zugeordnet. Mittels dieser Elektroden können rotatorische Auslenkungen der seismischen Masse 9 um die x- und die y-Achse erfasst werden. Der beispielgemäße Beschleunigungssensor kann High-G-Beschleunigungen in x-Richtung und Low-G-Beschleunigungen in x- und y-Richtung erfassen. In Fig. 17 b) ist der Beschleunigungssensor in einem Schnitt, bezüglich einer Ebene parallel zur x-z-Ebene durch die Gerade A-A, dargestellt und in Fig. 17 c) entsprechend bezüglich einer Ebene parallel zur y-z-Ebene durch die Gerade B-B.
Alternativ sind in einem nicht dargestellten Ausführungsbeispiel Torsionsfedern 7c und 7d relativ steif ausgebildet, wodurch der zusätzliche Rahmen 2a als High-G-Element genutzt wird. Dafür entfallen bei diesem Ausführungsbeispiel Federelemente 3 sowie Kammstrukturen 5,6, wodurch der erste Rahmen 2b steif mit Substrat 1 verbunden ist.

## Patentansprüche

1. Mikromechanischer Beschleunigungssensor, umfassend zumindest ein Substrat (1), einen oder mehrere Rahmen (2, 2a, 2b), von denen wenigstens ein erster Rahmen (2, 2b) mittels zumindest eines Federelements (3, 3b) direkt oder indirekt am Substrat (1) aufgehängt ist und so ausgelegt ist, dass er bei Einwirkung zumindest einer ersten Beschleunigung gegenüber dem Substrat (1) ausgelenkt wird, und zumindest eine erste seismische Masse (9, 9a), welche mittels wenigstens eines Federelements (7, 7a) an dem ersten (2, 2b) oder einem zusätzlichen Rahmen (2a) aufgehängt ist und so ausgelegt ist, dass sie bei Einwirkung einer, insbesondere von der ersten Beschleunigung verschiedenen, Beschleunigung gegenüber diesem Rahmen (2, 2a) ausgelenkt wird, **dadurch gekennzeichnet, dass**
der Beschleunigungssensor so ausgelegt ist, dass durch die Auslenkung des ersten Rahmens relativ zum Substrat Beschleunigungen erfasst werden können, welche betragsmäßig größer als 25g sind und durch den ersten Rahmen sowie indirekt durch die an diesem befestigten und/oder aufgehängten Bauelemente ein irbagsensorteilelement, als ein erstes Teil-Beschleunigungssensorelement verwirklicht ist, und wobei durch die Auslenkung zumindest der ersten seismischen Masse relativ zu dem Rahmen, an welchem diese aufgehängt ist, Beschleunigungen erfasst werden können, welche weniger als 10g betragen und durch die erste seißmißche Masse ein zweites Teil-Beschleunigungsensorelement für ein elektronisches Stabilitats-Programm verwirklicht ist.

2. Beschleunigungssensor nach Anspruch 1, **dadurch gekennzeichnet, dass** zumindest die erste seismische Masse (9, 9a) mittels zumindest einer Torsionsfeder (7, 7a) an dem Rahmen (2, 2a) aufgehängt ist.

3. Beschleunigungssensor nach Anspruch 1 oder 2, **dadurch gekennzeichnet, dass** mindestens ein Rahmen (2a) mittels wenigstens einer Torsionsfeder (7c, 7d) an einem anderen Rahmen (2b) oder dem Substrat (1) aufgehängt ist.

4. Beschleunigungssensor nach mindestens einem der Ansprüche 1 bis 3, **dadurch gekennzeichnet, dass** wenigstens die erste seismische Masse (9, 9a) exzentrisch gegenüber ihrem Massenschwerpunkt (10) aufgehängt ist.

5. Beschleunigungssensor nach mindestens einem der Ansprüche 2 bis 4, **dadurch gekennzeichnet, dass** der erste Rahmen (2, 2b) so aufgehängt ist, dass die aufgrund der ersten Beschleunigung hervorgerufene Auslenkung eine Richtung aufweist, welche im Wesentlichen parallel zur Torsionsachse der Torsionsaufhängung (7, 7a) der ersten seismischen Masse (9, 9a) ist.

6. Beschleunigungssensor nach mindestens einem der Ansprüche 1 bis 5, **dadurch gekennzeichnet, dass** die Grundfläche des Substrats (1) parallel zur x-y-Ebene eines kartesischen Koordinatensystems (x, y, z) ausgerichtet ist und der erste Rahmen (2, 2b) in x-Richtung oder y-Richtung auslenkbar am Substrat (1) aufgehängt, wobei die erste seismische Masse (9, 9a) an dem ersten (2) oder einem zusätzlichen Rahmen (2a) wenigstens in z-Richtung auslenkbar aufgehängt ist und der Beschleunigungssensor zumindest zwei Elektroden (8a, 8b, 8aa, 8ab, 8ba, 8bb) aufweist, welche im Wesentlichen parallel zur x-y-Ebene angeordnet und der ersten seismischen Masse (9, 9a) als Ausleseeinrichtung zugeordnet sind.

7. Beschleunigungssensor nach Anspruch 6, **dadurch gekennzeichnet, dass** zumindest eine der Elektroden (8a, 8b, 8aa, 8ab) in z-Richtung oberhalb und wenigstens eine andere der Elektroden (8ba, 8bb) in z-Richtung unterhalb der seismischen Masse (9) angeordnet ist.

8. Beschleunigungssensor nach mindestens einem der Ansprüche 1 bis 7, **dadurch gekennzeichnet, dass** zumindest die erste seismische Masse (9, 9a) und zusätzlich eine zweite seismische Masse (9b, 11) an dem ersten Rahmen (2, 2a) aufgehängt ist.

9. Beschleunigungssensor nach mindestens einem der Ansprüche 6 bis 8, **dadurch gekennzeichnet, dass** dieser einen ersten Rahmen (2b) umfasst, welcher am Substrat (1) so aufgehängt ist, dass er, insbesondere im Wesentlichen ausschließlich, in x-Richtung auslenkbar ist, wobei der Beschleunigungssensor zusätzlich einen zweiten Rahmen (2a) aufweist, welcher im Innenbereich des ersten Rahmens (2b) angeordnet ist und an diesem so aufgehängt ist, dass er, insbesondere im Wesentlichen ausschließlich, in y-Richtung auslenkbar ist, und wobei im Innenbereich des zweiten Rahmens (2a) wenigstens eine seismische Masse (9a, 9b, 9c, 9d) angeordnet ist, die am zweiten Rahmen (2a) mittels wenigstens einer Torsionsfeder (7a, 7b, 7c, 7d) aufgehängt ist und, insbesondere im Wesentlichen ausschließlich, in z-Richtung auslenkbar ist.

10. Beschleunigungssensor nach Anspruch 9, **dadurch gekennzeichnet, dass** dieser vier seismische Massen (9a, 9b, 9c, 9d) aufweist, welche jeweils am zweiten Rahmen (2a) aufgehängt sind, wobei der zweite Rahmen (2a) ein Außenrahmensegment (20) und ein Innenrahmensegment (21) umfasst, und jeweils zwei seismische Massen (9b, 9d) mit einer Torsionsachse im Wesentlichen parallel zur x-Achse und jeweils zwei seismische Massen (9a, 9c) mit einer Torsionsachse im Wesentlichen parallel zur y-Achse aufgehängt sind.

11. Beschleunigungssensor nach mindestens einem der Ansprüche 6 bis 10, **dadurch gekennzeichnet, dass** zumindest die erste seismische Masse (9, 9a) wenigstens auf ihrer, den Elektroden (8a, 8b) gegenüberliegenden Oberfläche, Gräben (15) aufweist, welche insbesondere jeweils zueinander im Wesentlichen parallel ausgebildet sind.

12. Beschleunigungssensor nach mindestens einem der Ansprüche 1 bis 11, **dadurch gekennzeichnet, dass** zumindest ein Federelement (3), an welchem eine seismische Masse (9) oder ein Rahmen (2) aufgehängt ist, und/oder wenigstens eine Torsionsfeder (7), an welcher eine seismische Masse (9) oder ein Rahmen (2a) aufgehängt ist, mindestens ein piezosensitives Element (22a, 22b, 23) aufweist/ aufweisen.

13. Beschleunigungssensor, **dadurch gekennzeichnet, dass** dieser zwei Beschleunigungs-Teilsensoren (A, B) nach mindestens einem der Ansprüche 1 bis 12 umfasst, welche insbesondere ein gemeinsames Substrat (1) aufweisen, wobei diese beiden Beschleunigungs-Teilsensoren (A, B) im Wesentlichen orthogonal zueinander angeordnet sind und gemeinsam einen integrierten Beschleunigungssensor bilden.

14. Verfahren zur Herstellung eines Beschleunigungssensors, wobei mittels wenigstens eines Herstellungsprozesses zur Herstellung mikromechanischer Systeme aus einem Substrat, welches insbesondere aus kristallinem Silizium oder mehreren Schichten Halbleitermaterials und/oder Metall/en besteht, mikromechanische Elemente ausgebildet werden, **dadurch gekennzeichnet, dass** dabei zumindest in Teilen ein Beschleunigungssensor gemäß mindestens einem der Ansprüche 1 bis 13 ausgebildet wird.

15. Verwendung des Beschleunigungssensors nach mindestens einem der Ansprüche 1 bis 13 in Kraftfahrzeugen, insbesondere als kombinierter, integrierter Airbag-/ ESP-Sensor.

## Claims

1. Micromechanical acceleration sensor, comprising at least one substrate (1), one or more frames (2, 2a, 2b), at least a first frame (2, 2b) of which is suspended directly or indirectly on the substrate (1) by means of at least one spring element (3, 3b), and is configured in such a way that it is deflected with respect to the substrate (1) when at least a first acceleration acts, and at least a first seismic mass (9, 9a) which is suspended on the first frame (2, 2b) or an additional frame (2a) by means of at least one spring element (7, 7a), and is configured in such a way that it is deflected with respect to this frame (2, 2a) when an acceleration acts which is in particular different from the first acceleration, **characterized in that** the acceleration sensor is configured in such a way that as a result of the deflection of the first frame relative to the substrate it is possible to detect wherein accelerations which are greater in absolute value than 25 g, and an airbag sensor component element is implemented as a first component acceleration sensor element by the first frame and indirectly by the components which are mounted or suspended thereon, and accelerations which are less than 10 g can be detected as a result of the deflection of at least the first seismic mass relative to the frame on which said mass is suspended, and a second component acceleration sensor element for an electronic stability program is implemented by the first seismic mass.

2. Acceleration sensor according to Claim 1, **characterized in that** at least the first seismic mass (9, 9a) is suspended on the frame (2, 2a) by means of at least one torsion spring (7, 7a).

3. Acceleration sensor according to Claim 1 or 2, **characterized in that** at least one frame (2a) is suspended on another frame (2b) or the substrate (1) by means of at least one torsion spring (7c, 7d).

4. Acceleration sensor according to at least one of Claims 1 to 3, **characterized in that** at least the first seismic mass (9, 9a) is suspended eccentrically with respect to its mass center of gravity (10).

5. Acceleration sensor according to at least one of Claims 2 to 4, **characterized in that** the first frame (2, 2b) is suspended in such a way that the deflection which is caused by the first acceleration has a direction which is essentially parallel to the torsion axis of the torsion suspension (7, 7a) of the first seismic mass (9, 9a).

6. Acceleration sensor according to at least one of Claims 1 to 5, **characterized in that** the base surface of the substrate (1) is oriented parallel to the x-y plane of a Cartesian coordinate system (x, y, z), and the first frame (2, 2b) is suspended on the substrate (1) such that it can be deflected in the x direction or y direction, wherein the first seismic mass (9, 9a) is suspended on the first frame (2) or an additional frame (2a) such that it can be deflected at least in the z direction, and the acceleration sensor has at least two electrodes (8a, 8b, 8aa, 8ab, 8ba, 8bb) which are arranged essentially parallel to the x-y plane and are assigned to the first seismic mass (9, 9a) as a reading device.

7. Acceleration sensor according to Claim 6, **characterized in that** at least one of the electrodes (8a, 8b, 8aa, 8ab) is arranged in the z direction above the seismic mass (9), and at least one other of the electrodes (8ba, 8bb) is arranged in the z direction below the seismic mass (9).

8. Acceleration sensor according to at least one of Claims 1 to 7, **characterized in that** at least the first seismic mass (9, 9a) and in addition a second seismic mass (9b, 11) is suspended on the first frame (2, 2a).

9. Acceleration sensor according to at least one of Claims 6 to 8, **characterized in that** said acceleration sensor comprises a first frame (2b) which is suspended on the substrate (1) in such a way that it can be deflected, in particular essentially exclusively, in the x direction, wherein the acceleration sensor additionally has a second frame (2a) which is arranged in the internal region of the first frame (2b) and is suspended thereon in such a way that it can be deflected, in particular essentially exclusively, in the y direction, and wherein at least one seismic mass (9a, 9b, 9c, 9d) which is suspended on the second frame (2a) by means of at least one torsion spring (7a, 7b, 7c, 7d) and can be deflected, in particular essentially exclusively, in the z direction, is arranged in the internal region of the second frame (2a).

10. Acceleration sensor according to Claim 9, **characterized in that** said acceleration sensor has four seismic masses (9a, 9b, 9c, 9d) which are each suspended on the second frame (2a), wherein the second frame (2a) comprises an external frame segment (20) and an internal frame segment (21), and in each case two seismic masses (9b, 9d) are suspended with a torsion axis essentially parallel to the x axis and in each case two seismic masses (9a, 9c) are suspended with a torsion axis essentially parallel to the y axis.

11. Acceleration sensor according to at least one of Claims 6 to 10, **characterized in that** at least the first seismic mass (9, 9a) has, at least on its surface lying opposite the electrodes (8a, 8b), trenches (15) which are each formed in particular essentially parallel to one another.

12. Acceleration sensor according to at least one of Claims 1 to 11, **characterized in that** at least one spring element (3) on which a seismic mass (9) or a frame (2) is suspended, and/or at least one torsion spring (7) on which a seismic mass (9) or a frame (2a) is suspended, has/have at least one piezo-sensitive element (22a, 22b, 23).

13. Acceleration sensor, **characterized in that** said sensor comprises two acceleration component sensors (A, B) according to at least one of Claims 1 to 12 which have, in particular, a common substrate (1), wherein these two acceleration component sensors (A, B) are arranged essentially orthogonally to one another and together form an integrated acceleration sensor.

14. Method for manufacturing an acceleration sensor, wherein micromechanical elements are formed by means of at least one manufacturing process for manufacturing micromechanical systems from a substrate which is composed, in particular, of crystalline silicon or a plurality of layers of semiconductor material and/or metal/metals, **characterized in that** at least in parts an acceleration sensor is embodied here in accordance with at least one of Claims 1 to 13,

15. Use of the acceleration sensor according to at least one of Claims 1 to 13 in motor vehicles, in particular as a combined, integrated airbag/ESP sensor.

## Revendications

1. Sonde micromécanique d'accélération comprenant au moins un substrat (1),
un ou plusieurs bâtis (2, 2a, 2b) parmi lesquels au moins un premier bâti (2, 2b) est suspendu directement ou indirectement sur le substrat (1) au moyen d'un élément élastique (3, 3b) et est conçu de manière à être dévié par rapport au substrat (1) lorsqu'au moins une première accélération agit et
au moins une première masse sismique (9, 9a) suspendue au moyen d'au moins un élément élastique (7, 7a) sur le premier bâti (2, 2b) ou sur un bâti supplémentaire (2a) et conçue de manière à être déviée par rapport à ce bâti (2, 2a) sous l'action d'une accélération, en particulier différente de la première accélération,
**caractérisée en ce que**
la sonde d'accélération est conçue de telle sorte que des accélérations d'un niveau supérieur à 25 g puissent être détectées par la déviation du premier bâti par rapport au substrat,
**en ce qu'**un élément partiel de sonde de coussin gonflable de sécurité est réalisé en tant que premier élément partiel de sonde d'accélération par l'intermédiaire du premier bâti ainsi qu'indirectement par l'intermédiaire des composants fixés et/ou suspendus sur ce dernier,
**en ce que** des accélérations inférieures à 10 g peuvent être saisies par la déviation d'au moins la première masse sismique par rapport au bâti sur lequel elle est suspendue et
**en ce qu'**un deuxième élément partiel de sonde d'accélération prévu pour un programme électronique de stabilité est réalisé par l'intermédiaire de la première masse sismique.

2. Sonde d'accélération selon la revendication 1, **caractérisée en ce qu'**au moins la première masse sismique (9, 9a) est suspendue sur le bâti (2, 2a) au moyen d'au moins un ressort de torsion (7, 7a).

3. Sonde d'accélération selon les revendications 1 ou 2, **caractérisée en ce qu'**au moins un bâti (2a) est suspendu à un autre bâti (2b) ou au substrat (1) au moyen d'au moins un ressort de torsion (7c, 7d).

4. Sonde d'accélération selon au moins l'une des revendications 1 à 3, **caractérisée en ce qu'**au moins la première masse sismique (9, 9a) est suspendue de manière décentrée par rapport à son centre de masse (10).

5. Sonde d'accélération selon au moins l'une des revendications 2 à 4, **caractérisée en ce que** le premier bâti (2, 2b) est suspendu de telle sorte qu'il présente une orientation essentiellement parallèle à l'axe de torsion de la suspension en torsion (7, 7a) de la première masse sismique (9, 9a) suite à la déviation provoquée par la première accélération.

6. Sonde d'accélération selon au moins l'une des revendications 1 à 5, **caractérisée en ce que** la surface de base du substrat (1) est orientée parallèlement au plan x-y d'un système (x, y, z) de coordonnées cartésiennes, **en ce que** le premier bâti (2, 2b) est suspendu sur le substrat (1) de manière à pouvoir être dévié dans la direction x ou dans la direction y, **en ce que** la première masse sismique (9, 9a) est suspendue sur le premier bâti (2) ou sur un bâti supplémentaire (2a) de manière à pouvoir être déviée au moins dans la direction z et **en ce que** la sonde d'accélération présente comme dispositif de lecture au moins deux électrodes (8a, 8b, 8aa, 8ab, 8ba, 8bb) disposées essentiellement parallèlement au plan x-y et associées à la première masse sismique (9, 9a).

7. Sonde d'accélération selon la revendication 6, **caractérisée en ce qu'**au moins l'une des électrodes (8a, 8b, 8aa, 8ab) est disposée au-dessus de la masse sismique (9) dans la direction z et **en ce qu'**au moins une autre des électrodes (8ba, 8bb) est disposée en dessous de la masse sismique dans la direction z.

8. Sonde d'accélération selon au moins l'une des revendications 1 à 7, **caractérisée en ce qu'**au moins la première masse sismique (9, 9a) et au moins une deuxième masse sismique (9b, 11) sont suspendues sur le premier bâti (2, 2a).

9. Sonde d'accélération selon au moins l'une des revendications 6 à 8, **caractérisée en ce qu'**elle comporte un premier bâti (2b) suspendu sur le substrat (1) de telle sorte qu'il puisse être dévié en particulier de manière essentiellement exclusive dans la direction x, la sonde d'accélération présentant de plus un deuxième bâti (2a) disposé à l'intérieur du premier bâti (2b) et suspendu à ce dernier de telle sorte qu'il puisse être dévié en particulier de manière essentiellement exclusive dans la direction y, au moins une masse sismique (9a, 9b, 9c, 9d) suspendue au deuxième bâti (2a) au moyen d'au moins un ressort de torsion (7a, 7b, 7c, 7d) étant disposée à l'intérieur du deuxième bâti (2a) et pouvant être déviée en particulier de manière essentiellement exclusive dans la direction z.

10. Sonde d'accélération selon la revendication 9, **caractérisée en ce qu'**elle présente quatre masses sismiques (9a, 9b, 9c, 9d) qui sont toutes suspendues sur le deuxième bâti (2a), le deuxième bâti (2a) comportant un segment extérieur (20) de bâti et un segment intérieur (21) de bâti, deux masses sismiques (9b, 9d) étant suspendues avec un axe de torsion essentiellement parallèle à l'axe x et deux masses sismiques (9a, 9c) étant suspendues avec un axe de torsion essentiellement parallèle à l'axe y.

11. Sonde d'accélération selon au moins l'une des revendications 6 à 10, **caractérisée en ce qu'**au moins la première masse sismique (9, 9a) présente au moins sur sa surface située face aux électrodes (8a, 8b) des sillons (15) réalisés en particulier essentiellement parallèles l'un à l'autre.

12. Sonde d'accélération selon au moins l'une des revendications 1 à 11, **caractérisée en ce qu'**au moins un élément élastique (3) sur lequel une masse sismique (9) ou un bâti (2) sont suspendus et/ou au moins un ressort de torsion (7) sur lequel une masse sismique (9) ou un bâti (2a) sont suspendus présentent au moins un élément piézo-sensible (22a, 22b, 23).

13. Sonde d'accélération **caractérisée en ce qu'**elle comporte deux sondes partielles d'accélération (A, B) selon au moins l'une des revendications 1 à 12 et qui présentent en particulier un substrat (1) commun, ces deux sondes partielles d'accélération (A, B) étant disposées essentiellement à la perpendiculaire l'une de l'autre et formant ensemble une sonde d'accélération intégrée.

14. Procédé de fabrication d'une sonde d'accélération dans lequel des éléments micromécaniques sont formés au moyen d'un procédé de fabrication de systèmes micromécaniques sur un substrat constitué en particulier de silicium cristallin ou de plusieurs couches de matériau semi-conducteur et/ou de métaux, **caractérisé en ce que**
ce procédé permet de former au moins en partie une sonde d'accélération selon au moins l'une des revendications 1 à 13.

15. Utilisation de la sonde d'accélération selon au moins l'une des revendications 1 à 13 dans des véhicules, en particulier comme sonde combinée et intégrée pour coussin gonflable de sécurité et ESP.
